# NEUE EUROPÄISCHE PATENTSCHRIFT

(11) **EP 2 353 758 B2**
(45) Veröffentlichungstag und Bekanntmachung des Hinweises auf die Entscheidung über den Einspruch: **27.02.2019**
(45) Hinweis auf die Patenterteilung: 07.03.2012
(21) Anmeldenummer: 10000837.4
(22) Anmeldetag: 28.01.2010
(51) Int. Cl.: B23C 5/04, B27G 13/08

(54) **Bearbeitungswerkzeug**
Machining tool
Outil d'usinage

(43) Veröffentlichungstag der Anmeldung: 10.08.2011
(73) Patentinhaber: Ledermann GmbH & Co. KG, 72160 Horb (DE)
(72) Erfinder: Dressler, Martin, Dr., 73614 Schorndorf-Weiler (DE)
(74) Vertreter: Wasmuth, Rolf

(56) Entgegenhaltungen:
- WO-A1-2007/107129
- AT-B- 401 488
- FR-A1- 2 703 610
- JP-A- 62 019 314
- US-A- 3 776 289
- US-A- 4 936 361
- US-A- 5 947 649
- <<<N O N - C I T E D D O C U M E N T>>> September 2009 (2009-09), Leitz-Lexikons Edition 5 page 141, 143,
- <<<N O N - C I T E D D O C U M E N T>>> André Wagenführ, Frieder Scholz: "Taschenbuch der Holztechnik", 2012, Carl-Hanser Verlag, München page 273,
- <<<N O N - C I T E D D O C U M E N T>>> "Leuco Handbook", 2005 pages 7-78,
- <<<N O N - C I T E D D O C U M E N T>>> Stümeier: "Fräsen von Spanplatten mit hochharten Schneidstoffen", Fortschritt-Berichte VDI Reihe 2, no. 181 , page 80, 126,
- <<<N O N - C I T E D D O C U M E N T>>> "Fräsen, Kreissägen"; "Teil 1" In: Saljé E.; Liebrecht R.: "Begriffe der Holzbearbeitung", 1983, Vulkan-Verlag, Essen

## Beschreibung

Die Erfindung betrifft ein Bearbeitungswerkzeug für die zerspanende Bearbeitung von Werkstoffen, insbesondere für Holz oder holzartige Werkstoffe, Metalle, Kunststoffe und/oder Verbundwerkstoffe der im Oberbegriff des Anspruchs 1 angegebenen Gattung.

Bei der zerspanenden Bearbeitung von Werkstoffen wird eine nacharbeitsfreie glatte Oberfläche angestrebt, für die die Schneidengeometrie des Bearbeitungswerkzeuges optimiert werden muss. Insbesondere bei der Bearbeitung von Holz oder holzartigen Werkstoffen sind aber verschiedene nachteilige Effekte zu beobachten, die die Qualität der bearbeiteten Oberfläche beeinträchtigen. Bei der Zerspanung von Holz tritt beispielsweise die sogenannte Vorspaltung ein. Beim Abnehmen eines Spanes in Faserrichtung eilt der Schneide ein als Vorspaltung bezeichneter Riss voraus. Dieser erleichtert zwar die Bearbeitung und verlängert die Standzeit der Schneide, führt aber auch zu einer unerwünscht rauen Oberfläche. Außerdem kann es zu einem Wiederaufstellen der Werkstückfasern nach dem Trennen kommen.

Um trotz dieser Effekte eine möglichst glatte und nacharbeitsfreie Oberfläche zu erzielen, muss die Werkzeugschneidkante eine geringe Schneidkantenverrundung und einen kleinen Keilwinkel aufweisen. Insbesondere der Keilwinkel unterliegt aber der Einschränkung, dass ein bestimmter Wert bei verschiedenen Schneidenwerkstoffen nicht unterschritten werden darf. Bei einem zu geringen Keilwinkel kommt es schon zu Beginn der Bearbeitung zu einer Abstumpfung der Schneidekante mit einer Vergrößerung der Schneidkantenverrundung und/oder zu Ausbrüchen an der Schneidkante mit der Folge, dass die erforderliche Schnittgüte nicht erreicht wird.

Eine weitere Einflussgröße ist der zu bearbeitende Werkstoff. So tritt beispielsweise bei der insbesondere für Fensterrahmen eingesetzten Holzsorte Meranti ein Schneidenverschleiß ein, der im Vergleich zum Schneidenverschleiß bei der Zerspanung von Fichte etwa das Fünfzigfache beträgt.

Um also einerseits aus Verschleißgründen einen nicht zu geringen Keilwinkel und aus Gründen der hohen Oberflächengüte einen nicht zu großen Keilwinkel einzusetzen, können üblicherweise Schnellarbeitsstahl mit Keilwinkeln zwischen 30° und 45° und Hartmetalle mit Keilwinkeln zwischen 40° und 55° eingesetzt werden. Härtere Schneidenwerkstoffe mit größeren Keilwinkeln sind nicht einsetzbar.

Eine weitere Einflussgröße zur Beeinflussung des Zerspanungergebnisses ist der Achswinkel, in dem die Schneidkante relativ zur Drehachse bzw. zu ihrer Drehbewegungsrichtung angeordnet ist. Nach dem Stand der Technik wird hierbei als problematisch angesehen, dass durch die Schrägstellung der Schneiden nicht nur Reaktionskräfte in der Drehbewegungsrichtung sondern auch senkrecht dazu in Axialrichtung auftreten. Zur Lösung dieses Problems ist in der WO 2008/113314 A1 ein Walzenfräser beschrieben, bei dem Hartmetallschneidplatten abschnittsweise mit unterschiedlichem Achswinkel derart ausgerichtet sind, dass sich die beim Fräsprozess in den verschiedenen Abschnitten entstehenden Axialkräfte gegeneinander zumindest näherungsweise aufheben. Das Problem des Schneidenverschleißes und der Oberflächengüte ist damit aber nicht behoben, so dass Schneiden mit den üblichen Keilwinkeln innerhalb der oben beschriebenen Grenzen eingesetzt werden müssen. Ein Bearbeitungswerkzeug gemäß dem Oberbegriff des Anspruchs 1 ist aus US 5 947 649 bekannt.

Der Erfindung liegt die Aufgabe zugrunde, ein gattungsgemäßes Bearbeitungswerkzeug derart weiterzubilden, dass trotz der Erzielung eines verbesserten Oberflächenergebnisses ein verringerter Verschleiß eintritt.

Diese Aufgabe wird durch ein Bearbeitungswerkzeug mit den Merkmalen des Anspruchs 1 gelöst.

Nach der Erfindung wird vorgeschlagen, dass die Achswinkel der einzelnen Schneiden in einem Bereich von einschließlich 55° bis < 90° liegen, und dass die Keilwinkel dieser Schneiden ≥ 55° sind und vorteilhaft in einem Bereich von einschließlich 55° bis einschließlich 80° liegen. Bevorzugt liegen die Achswinkel in einem Bereich von einschließlich 60° bis einschließlich 80° und betragen insbesondere etwa 70°.

Durch die erfindungsgemäße Anordnung wird erreicht, dass die Schneidkanten aufgrund ihrer großen Achswinkel nicht senkrecht, sondern in einem schälenden Schnitt auf das Werkstück treffen. Hierdurch findet kein Fräsen im klassischen Sinne mehr statt, sondern ein Abschälen des Werkstoffs mit einer überwiegend senkrecht zur Drehbewegungsrichtung liegenden Richtungskomponente. Trotz des im Vergleich zu den üblichen Keilwinkeln für die Bearbeitungsaufgaben übergroßen Keilwinkels wird in der genannten schälenden Schnittebene der wirksame Keilwinkel, der wirksame Freiwinkel und der aus den beiden vorgenannten Winkeln zusammengesetzt wirksame Schnittwinkel deutlich kleiner. Hierdurch wird die Vorspaltung auf ein Minimum reduziert. Das Wiederaufstellen der Werkstückfasern nach dem Trennen wird vermieden, so dass nacharbeitsfreie glatte Oberflächen beim Zerspanen erzielt werden. Außerdem wird eine geringere Schnittenergie benötigt, was auch für Nicht-Holz-Werkstoffe von Vorteil ist. Für den Verschleiß der Schneidkante ist aber nicht der vorgenannte, in der Drehbewegungsrichtung gemessene wirksame Keilwinkel maßgeblich, sondern der tatsächliche, im Querschnitt der Schneide gemessene Keilwinkel. Da dieser entsprechend groß ist, bleibt die Schneidkante dauerhaft scharf. Schneidkantenverrundung und die Tendenz zur Bildung von Ausbrüchen in der Schneidkante sind auf ein Minimum reduziert, wodurch bei verbessertem Oberflächenergebnis des Zerspanungsvorganges eine Erhöhung der Standzeit des Bearbeitungswerkzeuges erzielt ist.

In einer bevorzugten Ausführungsform sind die Schneiden als Umfangsschneiden mit einer Drehbewegungsrichtung ausgebildet, wobei die zugehörigen Achswinkel in einer Ebene gemessen sind, die durch die Drehbewegungsrichtung und eine parallel zur Drehachse liegenden Axialrichtung aufgespannt ist, und wobei die Achswinkel zwischen der Schneidkante und der Axialrichtung gebildet sind. Mit derartig angeordneten Umfangsschneiden lassen sich Kreissägewerkzeuge, Scheibenfräser, Profil- und Konturfräser bzw. Schaftwerkzeuge sowie auch Hobelwerkzeuge ausbilden.

In bevorzugter Weiterbildung sind die als Umfangsschneiden ausgebildeten Schneiden in Gruppen gegenläufig in Achswinkeln mit entgegengesetztem Vorzeichen und insbesondere mit gleichem Betrag angeordnet. Die bei der Zerspanung an den einzelnen Schneiden entstehenden Axialkraftkomponenten heben sich auf diese Weise zumindest näherungsweise auf. Dadurch sind Reaktionskräfte am Werkzeug und auch am Werkstück minimiert oder eliminiert.

Insbesondere sind die als Umfangsschneiden ausgebildeten Schneiden paarweise gegenläufig angeordnet. Es ist nämlich zu beobachten, dass Werkzeuge mit Achswinkeln bei der Bearbeitung von plattenförmigen Werkstoffen durch die axiale Anregung der Platte deutlich lauter als Werkzeuge ohne Achswinkel sind. In der vorgenannten erfindungsgemäßen Ausgestaltung heben sich durch die axialen Schnittkräfte an direkt einander gegenüberliegenden spiegelbildlichen Schneiden auf sehr engem Raum auf, wodurch das Bearbeitungswerkzeug weniger Schall emittiert.

Bei der Bearbeitung der Werkstoffe muss bei großen Achswinkeln darauf geachtet werden, dass die Schneiden an den Rändern des Werkstoffes immer gegen den Werkstoff gerichtet geführt sind. Ist nämlich die Schneide vom Werkstoff weg ausgerichtet, steigt die Gefahr von Werkstoffausrissen am Rand deutlich an. Damit für jede Werkstückbreite einfach ein Bereich des Bearbeitungswerkzeuges gefunden werden kann, in dem die Schneiden an beiden Werkstückrändern zum Werkstück hin geneigt angeordnet sind, weisen in bevorzugter Weiterbildung der Erfindung die einzelnen Gruppen von Schneiden und gegenläufigen Schneiden eine jeweils unterschiedliche Farbmarkierung auf. Dies erleichtert eine Relativpositionierung zwischen Bearbeitungswerkzeug und werkstück derart, dass an beiden Werkstückkanten jeweils zum Werkstück hin geneigte Schneiden zum Einsatz kommen.

In einer vorteilhaften Variante der Erfindung sind die als Umfangsschneiden ausgebildeten Schneiden gleichläufig oder überwiegend gleichläufig in Achswinkeln mit gleichem Vorzeichen und insbesondere mit gleichem Betrag angeordnet. Dies kann beispielsweise dann zweckmäßig sein, wenn aufgrund der axialen Reaktionskräfte ein Andrücken des Werkstückes auf eine Unterlage gewünscht wird. Bei beidseitig beschichteten Holzwerkstoffen beispielsweise ist eine Anordnung der Schneiden auf beiden Seiten gegen den Beschichtungswerkstoff sinnvoll. Um unterschiedliche Plattenstärken bearbeiten zu können, werden solche Werkzeuge üblicherweise mit wenigen, von einer Referenzfläche in der Maschine ausgehenden Schneiden in die eine Richtung und die restlichen Schneiden des Werkzeuges in die andere Richtung ausgeführt. Je nach bearbeiteter Plattenstärke kommen dann mehr oder weniger der restlichen Schneiden in Eingriff, was zu der gewünschten axialen Anpressung führt. Bei den Umfangsschneiden muss die Konturverzerrung, die sich durch den großen Achswinkel der Schneidkanten gegenüber der gewünschten Bearbeitungskontur ergibt, durch eine entsprechend angepasste Kontur der Schneidkante korrigiert werden. Die Schneidkanten der als Umfangsschneiden ausgebildeten Schneiden sind deshalb vorteilhaft derart ballig profiliert bzw. geschliffen, dass sie entlang ihrer gesamten Länge auf einem gemeinsamen Flugkreisprofil, insbesondere auf einem gemeinsamen Flugkreiszylinder oder Flugkreiskegel verlaufen, wobei das Flugkreisprofil dem gewünschten Fräsprofil entspricht. Hierduch entsteht eine exakte zylindrische bzw. kegelige oder anders geartete gewünschte Fräskontur bzw. das entsprechend gewünschte Fräsprofil. Bei einer von der Zylinder- oder Kegelform abweichenden Kontur ist der Verlauf der Umfangsschneiden in analoger Weise zu korrigieren.

In einer zweckmäßigen Variante sind die Schneiden mit ihren Schneidkanten als Stirnschneiden mit einer Drehbewegungsrichtung ausgebildet, wobei die zugehörigen Achswinkel in einer Ebene gemessen sind, die durch die Drehbewegung und eine senkrecht zur Drehachse liegende Radialrichtung aufgespannt ist, wobei die Achswinkel zwischen der Schneidkante und der Radialrichtung gebildet sind. Hierdurch lassen sich Bohrungs- und Schaftwerkzeuge bilden, an deren Stirnseite eine Zerspanung in erfindungsgemäßer Weise vorgenommen werden kann.

Das Bearbeitungswerkzeug umfasst einen Grundkörper und separat davon als ebene Schneidplatten ausgeführte Schneiden aus einem hochharten Schneidstoff, insbesondere aus Hartmetall, Schneidkeramik, monokristallinem Diamant, PKD (polykristalliner Diamant) oder CVD (Chemical Vapor Deposition = chemische Gasphasenabscheidung insbesondere für die Diamantbeschichtung), die nur in ebener Form herstellbar sind. Hierdurch lässt sich die Standzeit des Bearbeitungswerkzeuges in Verbindung mit den großen Keilwinkeln dieser Schneidenwerkstoffe weiter erhöhen und dennoch aufgrund des verringerten wirksamen Keil- bzw. Schnittwinkels ein erstklassiges Oberflächenergebnis erzielen.

Bevorzugt ist das Bearbeitungswerkzeug aus mindestens einem, bevorzugt mehreren auf einer Welle montierten Einzelwerkzeugen zusammengesetzt. Hierdurch lassen sich baukastenartig nach Bedarf unterschiedliche Gesamtfräskonturen einstellen. Dabei können auch Einzelwerkzeuge mit unterschiedlichen Achswinkeln kombiniert werden, um axiale Reaktionskräfte einzustellen bzw. zu eliminieren, oder um lokal ein bestimmtes Schnittergebnis zu erzielen.

Ausführungsbeispiele der Erfindung sind nachfolgend anhand der Zeichnung näher beschrieben. Es zeigen:
- Fig. 1: in einer perspektivischen Ansicht ein erstes Ausfüh- rungsbeispiel des erfindungsgemäßen Bearbeitungswerk- zeuges mit in gleicher Richtung orientierten Umfangs- schneiden sowie mit Stirnschneiden in erfindungsgemä- ßer Achswinkelanordnung;
- Fig. 2: eine Umfangsansicht der Anordnung nach Fig. 1 mit Einzelheiten zur Achswinkelausrichtung der Umfangs- schneiden;
- Fig. 3: eine schematische Draufsicht einer Umfangsschneide nach den Fig. 1 und 2 mit Angaben für unterschied- liche, in den Fig. 4 und 5 dargestellte Querschnitte;
- Fig. 4: eine Querschnittsdarstellung der Schneide nach Fig. 3 in einem senkrecht zur Schneidenlängsachse gelegten Querschnitt entlang der Linie IV-IV nach Fig. 3;
- Fig. 5: eine Querschnittsdarstellung der Schneide nach Fig. 3 in einem parallel zur Drehbewegungsrichtung liegenden Querschnitt entlang der Schnittlinie V-V nach Fig. 3;
- Fig. 6: eine Variante des Bearbeitungswerkzeuges nach den Fig. 1 und 2 mit paarweise gegenläufig angeordneten Schnei- den;
- Fig. 7: ein weiteres Ausführungsbeispiel der Erfindung in Form eines Hobelwerkzeuges mit optional farblich markierten Schneidengruppen;
- Fig. 8: ein weiteres Ausführungsbeispiel der Erfindung mit einem aus Einzelwerkzeugen zusammengesetzten Gesamt- werkzeug.

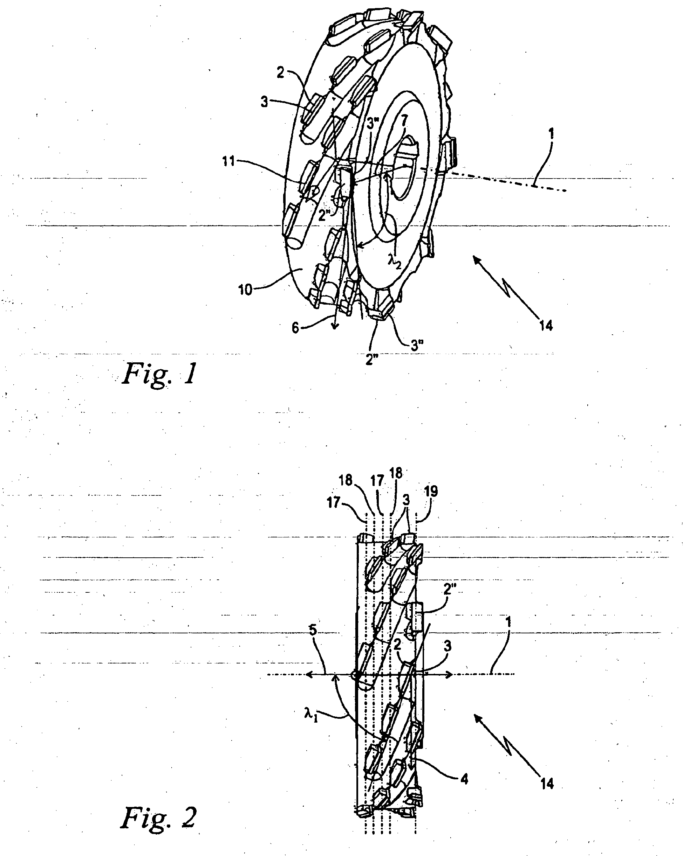

Fig. 1 zeigt in perspektivischer Ansicht ein erstes Ausführungsbeispiel eines erfindungsgemäß ausgeführten Bearbeitungswerkzeuges 14 für die zerspanende Bearbeitung von Werkstoffen, insbesondere für Holz oder holzartige Werkstoffe wie beschichtete oder unbeschichtete Spanplatten, Hartfaserplatten oder dergleichen. Das Bearbeitungswerkzeug 14 kann aber auch für andere Werkstoffe wie Faserverbundkunststoffe, Metalle oder dergleichen zweckmäßig sein. Das Bearbeitungswerkzeug 14 ist als Scheibenfräser ausgestaltet und für die Montage auf einem nicht dargestellten Werkzeugschaft vorgesehen. Im Betrieb wird das Bearbeitungswerkzeug 14 um eine senkrecht zur Scheibenebene liegende Drehachse 1 drehend angetrieben.

Das Bearbeitungswerkzeug 14 umfasst einen scheibenförmigen Grundkörper 10 mit Schneiden 2, 2", die ihrerseits jeweils Schneidkanten 3, 3" aufweisen. Die Schneiden 2, 2" als separat vom Grundkörper 10 ausgebildete Schneidplatten 11 ausgeführt. Der Grundkörper besteht aus Werkzeugstahl, während die Schneidplatten 11 aus einem hochharten Schneidstoff wie Hartmetall, Schneidkeramik, monokristallinem Diamant, PKS oder CVD bestehen. Die Schneidplatten 11 können fest mit dem Grundkörper 10 beispielsweise durch Verlöten, Verkleben, Verschweißen oder dergleichen befestigt sein. Alternativ kann eine lösbare Befestigung zweckmäßig sein, bei der die Schneidplatten 11 beispielsweise auf einem Träger befestigt und dabei mit dem Grundkörper 10 verschraubt, geklemmt oder formschlüssig gehalten sind. Die Schneiden 2, 2" sind fest vorgegeben in ihrer räumlichen Ausrichtung am Grundkörper 10 fixiert. Es kann aber auch zweckmäßig sein, die räumliche Ausrichtung der Schneiden 2, 2" relativ zum Grundkörper 10 einstellbar zu gestalten.

Der Grundkörper 10 ist im Wesentlichen zylindrisch ausgeführt, wobei auf dessen zylindrische Umfangsfläche eine Vielzahl von Schneiden 2 mit Schneidkanten 3 angeordnet ist, wobei die Schneiden 2 als Umfangsschneiden ausgebildet sind. Die Schneiden 2 sind in mindestens einer, bevorzugt in mindestens zwei, hier in sieben in Umfangsrichtung angeordneten Reihen 17, 18 (Fig. 2) angeordnet, wobei sich diese einzelnen Reihen 17, 18 bzw. Gruppen in der Axialrichtung 5 (Fig. 2) gegeneinander überlappen, um so ein gleichmäßiges Zerspanungsergebnis zu erzielen. Außerdem ist im Bereich einer Stirnfläche des Grundkörpers 10 eine Reihe 19 (Fig. 2) von Schneiden 2" mit Schneidkanten 3" angeordnet, die als Stirnschneiden ausgebildet sind. Die einzelnen als Stirnschneiden ausgebildeten Schneiden 2" liegen bezogen auf die Drehachse 1 auf einer Radialrichtung 7. Infolge der Drehbewegung des Bearbeitungswerkzeuges 14 um die Drehachse 1 führen die einzelnen Schneiden 2" eine kreisförmige Bewegung senkrecht zur Radialrichtung 7 und zur Drehachse 1 in einer Drehbewegungsrichtung 6 aus. Die Drehbewegungsrichtung 6 und die Radialrichtung 7 spannen eine Ebene auf, die senkrecht zur Drehachse 1 liegt. Die Schneidkanten 3" der als Stirnschneiden ausgebildeten Schneiden 2" liegen in dieser Ebene und sind in einem in dieser Ebene gemessenen Achswinkel λ₂ relativ zur Radialrichtung 7 angeordnet.

Fig. 2 zeigt eine Umfangsansicht der Anordnung nach Fig. 1 mit weiteren Einzelheiten zu ihrer geometrischen Ausgestaltung. Die als Umfangsschneiden ausgebildeten Schneiden 2 führen infolge der Drehbewegung um die Drehachse 1 eine Kreisbewegung mit einer Drehbewegungsrichtung 4 aus. Außerdem verläuft durch die als Umfangsschneiden ausgebildeten Schneiden 2 eine parallel zur Drehachse 1 liegende Achsrichtung 5. Durch die Drehbewegungsrichtung 4 und die Axialrichtung 5 wird eine Ebene aufgespannt, innerhalb derer gemessen die Schneidkanten 3 der als Umfangsschneiden ausgebildeten Schneiden 2 in einem Achswinkel λ₁ zur Axialrichtung 5 liegen.

Die Achswinkel λ₁, λ₂ nach den Fig. 1 und 2 liegen in einem Bereich von einschließlich 55° bis < 90°, bevorzugt in einem Bereich von einschließlich 60° bis einschließlich 80° und betragen im gezeigten Ausführungsbeispiel jeweils etwa 70°. Sämtliche als Umfangsschneiden ausgebildeten Schneiden 2 sind gleichläufig in Achswinkeln λ₁ mit gleichem Vorzeichen und gleichem Betrag angeordnet. Für bestimmte Bearbeitungsaufgaben kann es auch zweckmäßig sein, dass zwar die Vorzeichen der Achswinkel λ₁, nicht jedoch deren Betrag gleich ist, wie dies beispielsweise bei inhomogenen Materialien wie Faserverbundwerkstoffen von Bedeutung sein kann.

Das gezeigte Bearbeitungswerkzeug 14 ist als Profilfräser für ein zylindrisches Fräsprofil ausgestaltet. Da sich die Schneidkanten 3 der als Umfangsschneiden ausgebildeten Schneiden 2 aufgrund ihres großen Achswinkels λ₁ über einen bedeutsamen Umfangsabschnitt erstrecken, sind sie derart ballig ausgeführt, dass sie entlang ihrer gesamten Länge auf einem gemeinsamen Flugkreiszylinder verlaufen. Die ballige Ausführungsform ist bei den oberen Schneidkanten 3 entsprechend der Darstellung nach Fig. 2 zu erkennen.

Anstelle der gezeigten Zylinderkontur kann auch eine abweichende, beispielsweise geschwungene oder konische Kontur zweckmäßig sein, wobei ein in analoger Weise angepasster Verlauf der Schneidkanten 3 zu wählen ist. Der Achswinkel λ₁ wird hierbei ebenfalls in analoger Weise bestimmt.

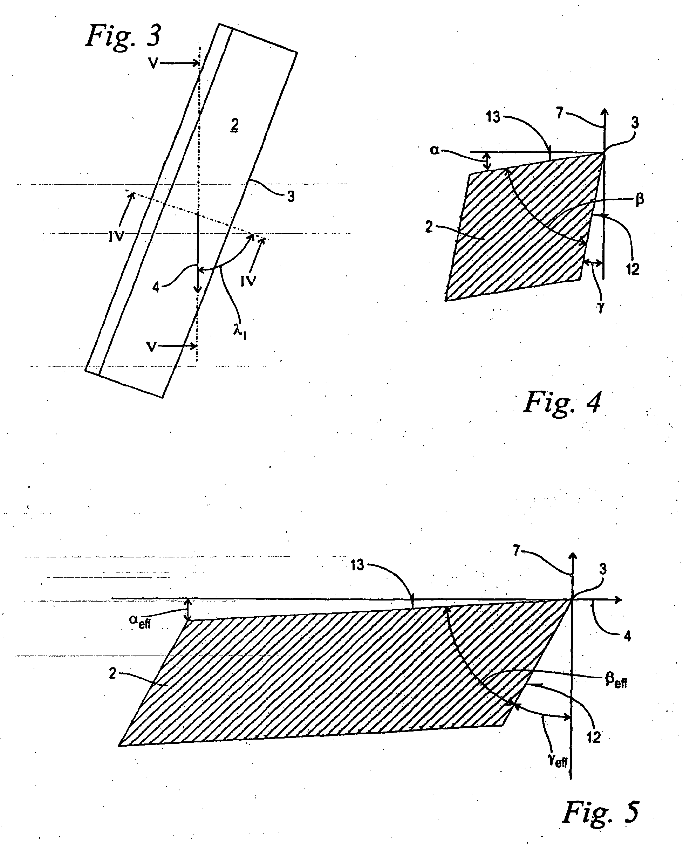

Fig. 3 zeigt eine schematische Draufsicht einer als Umfangsschneide ausgeführten Schneide 2 nach den Fig. 1 und 2 mit der zugehörigen Drehbewegungsrichtung 4. Durch die Schneide 2 sind zwei Schnittlinien, nämlich die Schnittlinie IV-IV senkrecht zur Längsachse der Schneide 2 sowie die Schnittlinie V-V parallel zur Drehbewegungsrichtung 4 gelegt.

Fig. 4 zeigt eine schematische Querschnittsdarstellung der Schneide 2 nach Fig. 3 entlang der dort dargestellten Schnittlinie IV-IV. Demnach weist die Schneide 2 beispielhaft einen trapezförmigen Querschnitt mit einem an der Schneidkante 3 ausgebildeten Keilwinkel β auf, wobei der Keilwinkel β von einer Spanfläche 12 und einer Freifläche 13 der Schneide 2 eingeschlossen wird. Der Keilwinkel β wird noch um einen Freiwinkel α und einen Spanwinkel γ zu insgesamt 90° ergänzt. Der Keilwinkel β ist nach der Erfindung ≥ 55° und liegt insbesondere in einem Bereich von einschließlich 55° bis einschließlich 80°, bevorzugt in einem Bereich von einschließlich 60° bis einschließlich 75° und beträgt hier beispielhaft 70°, während für den Freiwinkel α und den Spanwinkel γ hier beispielhaft jeweils 10° vorgesehen sind.

Da die Schneiden 2 entsprechend der Darstellung der Fig. 1 bis 3 aufgrund ihrer Drehbewegung und ihres Achswinkels λ₁ mit ihren Schneidkanten 3 nicht senkrecht zur Schneidkante 3, also nicht entlang der Schnittlinie IV-IV nach Fig. 3 auf das Werkstück auftreffen, sondern sich vielmehr in der Drehbewegungsrichtung 4 relativ zum Werkstück bewegen, sind für die Schnittverhältnisse an der Schneide 3 die geometrischen Verhältnisse entlang der Schnittlinie V-V heranzuziehen, wie diese in der Querschnittsdarstellung nach Fig. 5 gezeigt sind. Ebenso wie die Schneidkante 3 im Achswinkel λ₁ zur Axialrichtung 5 (Fig. 2) liegt, liegt auch die Schnittlinie V-V in diesem Achswinkel λ₁ zur Schnittlinie IV-IV. Entsprechend der Darstellung nach Fig. 5 ergeben sich hieraus im Vergleich zum Querschnitt nach Fig. 4 ein verringerter wirksamer bzw. effektiver Keilwinkel β_{eff} sowie ein ebenfalls verringerter wirksamer bzw. effektiver Freiwinkel α_{eff}, die sich zu einem gegenüber dem Querschnitt nach Fig. 4 verringerten Schnittwinkel aufaddieren. Gleichzeitig wird der wirksame bzw. effektive Spanwinkel γ_{eff} im Vergleich zum Querschnitt nach Fig. 4 größer. Durch gegenseitige Anpassung des tatsächlichen Keilwinkels β nach Fig. 4 und des Achswinkels λ₁ nach den Fig. 2 und 3 kann auf diese Weise der effektive Keilwinkel β_{eff} für ein gutes Schnittergebnis gegenüber dem tatsächlichen Keilwinkel β um beispielsweise 20° vermindert oder sogar auf das nach dem Stand der Technik als erforderlich angesehene Maß von 30° bis 55° gesenkt werden.

Für die Verschleißfestigkeit der Schneidkante 3 ist jedoch nicht der effektive Keilwinkel β_{eff} nach Fig. 5, sondern der tatsächliche Keilwinkel β nach Fig. 4 maßgeblich. Da dieser mit den weiter oben genanten Maßangaben im Vergleich zum Stand der Technik sehr hoch ist, werden Ausbrüche an den Schneiden 3 sowie eine Schneidkantenverrundung oder andere Verschleißerscheinungen zuverlässig vermieden, wodurch über eine verlängerte Standzeit ein erstklassiges Zerspanungsergebnis mit einer glatten Oberfläche erzielbar ist.

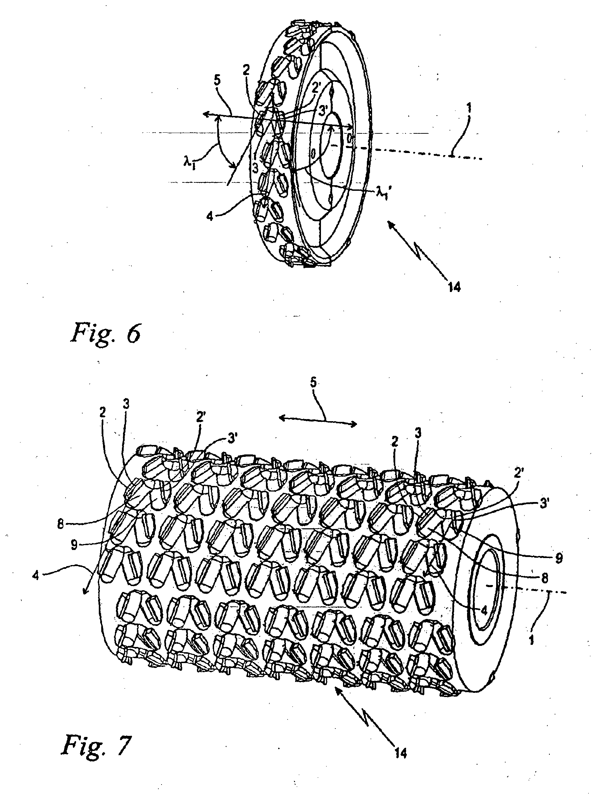

Sinngemäß das Gleiche gilt auch für die weiter unten im Zusammenhang mit den Fig. 6 und 7 beschriebenen Schneiden 2' mit ihren Schneidkanten 3' und zugehörigen Achswinkeln λ₁' sowie für die als Stirnschneiden ausgebildeten Schneiden 2" mit den Schneidkanten 3" und den zugehörigen Achswinkeln λ₂ nach den Fig. 1 und 2.

Im Ausführungsbeispiel nach den Fig. 1 und 2 weisen die als Umfangsschneiden ausgebildeten Schneiden 2 jeweils den in gleicher Richtung orientierten Achswinkel λ₁ auf, wodurch am Bearbeitungswerkzeug 14 und auch am Werkstück axiale in der Achsrichtung 5 (Fig. 2) wirkende Reaktionskräfte eintreten. Dies kann beispielsweise für das Anpressen des Werkstückes an einen Anschlag gewünscht bzw. zweckmäßig sein. Sofern solche Axialkräfte unerwünscht sind oder zumindest verringert werden sollen, kann eine Ausführungsform der Erfindung zum Einsatz kommen, wie sie beispielhaft in der perspektivischen Ansicht nach Fig. 6 dargestellt ist. Hierbei sind die als Umfangsschneiden ausgebildeten Schneiden 2, 2' in Gruppen bzw. in Reihen 17, 18 gegenläufig in zugeordneten Achswinkeln λ₁, λ₁' mit entgegengesetztem Vorzeichen, jedoch mit gleichem Betrag angeordnet. Insgesamt ist eine gleiche Anzahl von Schneiden 2 mit einem positiven Achswinkel λ₁ und Schneiden 2' mit einem negativen Achswinkel λ₁' vorgesehen, so dass sich die beim Zerspanungsvorgang auftretenden Axialkräfte zumindest näherungsweise gegenseitig aufheben bzw. kompensieren. Bei Bedarf kann aber auch eine Anordnung zweckmäßig sein, bei der die Beträge der in ihren Vorzeichen unterschiedlich geneigten Achswinkel λ₁, λ₁' voneinander abweichen und auch ggf. innerhalb einer Gruppe mit gleichem Achswinkelvorzeichen variieren. Diese Variation der Achswinkelbeträge kann so gestaltet sein, dass die mittlere Axialkraft einer Gruppe von Schneiden 2 sich mit der mittleren Axialkraft einer Gruppe von Schneiden 2' gegenseitig aufhebt. Sinngemäß das Gleiche gilt auch für eine Anordnung mit unterschiedlicher Anzahl von Schneiden 2 und gegenläufig dazu angeordneten Schneiden 2'. Natürlich kann aber auch eine Auslegung derart zweckmäßig sein, dass keine oder nur eine teilweise Kompensation der Axialkräfte auftritt, so dass eine nach Bedarf in Betrag und Richtung resultierende Axialkraft während des Betriebes auftritt.

Es kann zweckmäßig sein, Gruppen von Schneiden 2, 2' mit gegenläufigen Achswinkeln λ₁, λ₁' derart vorzusehen, dass jeweils eine oder mehrere Schneiden 2 mit einem zugeordneten Achswinkel λ₁ und eine bzw. mehrere Schneiden 2' mit zugeordneten gegenläufigen Achswinkeln λ₁' nebeneinanderliegend zu Gruppen zusammengefasst sind. Im Ausführungsbeispiel nach Fig. 6 sind jedoch sämtliche als Umfangsschneiden ausgebildeten Schneiden 2, 2' paarweise gegenläufig angeordnet, so dass bezogen auf die Achsrichtung 5 neben jeder Schneide 2 mit dem positiven Achswinkel λ₁ direkt angrenzend eine Schneide 2' mit dem zugeordneten gegenläufigen bzw. negativen Achswinkel λ₁' angeordnet ist. Die Anordnung ist dabei derart gewählt, dass die beiden Schneiden 3, 3' eines solchen Paares von Schneiden 2, 2' sich V-förmig in der Drehbewegungsrichtung 4 öffnen. Es kann aber auch eine umgekehrte Anordnung zweckmäßig sein, bei der die Schneidkanten 3, 3' in der Drehbewegungsrichtung 4 pfeilförmig aufeinander zulaufen.

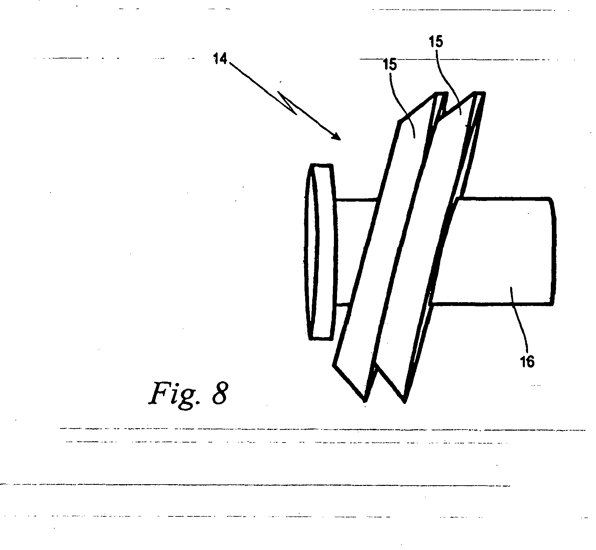

Die scheibenförmigen, als Schaftfräser ausgebildeten Bearbeitungswerkzeuge 14 nach den Fig. 1, 2 und 6 können als Einzelwerkzeug 15 betrieben oder in beliebiger Anzahl durch Auffädeln auf einen gemeinsamen Werkzeugschaft bzw. auf eine gemeinsame Motorenwelle, Dorn, Spindel oder Welle 16 zu einem Gesamtwerkzeüg zusammengesetzt werden, wie dies beispielhaft und schematisch in Fig. 8 dargestellt ist. Für die Erzeugung einer gewünschten bestimmten Fräskontur kann es dabei zweckmäßig sein, dass hierbei Einzelwerkzeuge 15 mit gleicher oder unterschiedlicher Fräskontur zum Einsatz kommen. Die Einzelwerkzeuge 15 können zu der gewünschten Gesamtkontur zusammengesetzt werden, woraus dann das gesamte erfindungsgemäße Bearbeitungswerkzeug 14 gebildet ist, und woraus sich die gewünschte Gesamtfräskontur ergibt. Dabei können auch Einzelwerkzeuge 15 mit unterschiedlichen Achswinkeln λ₁, λ₁' (Fig. 1, 2) kombiniert werden, um axiale Reaktionskräfte einzustellen bzw. zu eliminieren, oder um lokal ein bestimmtes Schnittergebnis zu erzielen. Insgesamt können nach der Erfindung beliebige Bearbeitungswerkzeuge 14 beispielweise in Form eines Kreissägewerkzeugs, eines Falzwerkzeugs, eines Profilfräsers oder im Zusammenhang mit als Stirnschneiden ausgeführten Schneiden 2" nach Fig. 1 als Stirnfräser oder Bohrwerkzeug ausgebildet werden.

Fig. 7 zeigt noch eine Variante der Anordnung nach Fig. 6, bei der das Bearbeitungswerkzeug 14 als Hobelwerkzeug ausgestaltet und dabei durch axiale Verlängerung der Anordnung nach Fig. 6 gebildet ist. Für die Anordnung der Schneiden 2, 2' gilt das Gleiche wie beim Bearbeitungswerkzeug 14 nach Fig. 6, wobei sich lediglich in der Axialrichtung 5 aufgrund der größeren in dieser Richtung gemessenen Längserstreckung des Bearbeitungswerkzeuges 14 eine größere Anzahl von Schneiden 2, 2' vorgesehen ist. Bei einem derartigen Bearbeitungswerkzeug 14 kann es auf eine exakte Positionierung relativ zum Werkstück derart ankommen, dass beim Bearbeitungsvorgang einander zugewandte bzw. zum Werkstück hin gerichtete Schneiden 2, 2' auf die Werkstückkanten auftreffen, um ein Ausfransen der Kanten zu vermeiden. Um dem Werker die genannte axiale Relativausrichtung zu erleichtern, weisen die einzelnen Gruppen von Schneiden 2 und Gruppen von gegenläufigen Schneiden 2, 2' optional jeweils unterschiedliche Farbmarkierungen 8, 9 auf, die nicht nur im Stillstand sondern auch im drehenden Betrieb des Bearbeitungswerkzeuges 14 sichtbar sind. Im drehenden Betrieb erzeugen die Farbmarkierungen 8, 9 visuell erkennbare farbliche Umfangskreise, anhand derer die axiale Relativausrichtung von Bearbeitungswerkzeug 14 und Werkstück erfolgen kann.

## Patentansprüche

1. Bearbeitungswerkzeug (14) für die zerspanende Bearbeitung von Werkstoffen, insbesondere für Holz oder holzartige Werkstoffe, Metalle, Kunststoffe und/oder Verbundwerkstoffe, vorgesehen zum drehenden Antrieb um eine Drehachse (1), umfassend einen Grundkörper (10) und mindestens eine in Umfangsrichtung angeordnete Reihe (17, 18, 19) von separat vom Grundkörper (10) als ebene Schneidplatten (11) ausgeführte einzelnen Schneiden (2, 2', 2'') aus einem hochharten Schneidstoff mit Schneidkanten (3, 3', 3"), die sich zumindest partiell überlappen, wobei die Schneidkanten (3, 3', 3'') einen Keilwinkel (β) aufweisen und in einem Achswinkel (λ₁, λ₁', λ₂) zur Drehachse (1) liegen,
**dadurch gekennzeichnet, dass** der Achswinkel (λ₁, λ₁', λ₂) in einem Bereich von einschließlich 55° bis < 90° liegt, und dass der Keilwinkel (β) ≥ 55° ist.

2. Bearbeitungswerkzeug nach Anspruch 1,
**dadurch gekennzeichnet, dass** der Keilwinkel (β) in einem Bereich von einschließlich 55° bis einschließlich 80° liegt.

3. Bearbeitungswerkzeug nach Anspruch 1 oder 2,
**dadurch gekennzeichnet, dass** der Achswinkel (λ₁, λ₁', λ₂) in einem Bereich von einschließlich 60° bis einschließlich 80° liegt und insbesondere etwa 70° beträgt.

4. Bearbeitungswerkzeug nach einem der Ansprüche 1 bis 3,
**dadurch gekennzeichnet, dass** die Schneiden (2, 2') mit ihren Schneidkanten (3, 3') als Umfangsschneiden mit einer Drehbewegungsrichtung (4) ausgebildet sind, wobei die zugehörigen Achswinkel (λ₁, λ₁') in einer Ebene gemessen sind, die durch die Drehbewegungsrichtung (4) und eine parallel zur Drehachse (1) liegenden Axialrichtung (5) aufgespannt ist, und wobei die Achswinkel (λ₁, λ₁') zwischen der Schneidkante (3, 3') und der Axialrichtung (5) gebildet sind.

5. Bearbeitungswerkzeug nach Anspruch 4,
**dadurch gekennzeichnet, dass** die als Umfangsschneiden ausgebildeten Schneiden (2, 2') in Gruppen gegenläufig in Achswinkeln (λ₁, λ₁') mit entgegengesetztem Vorzeichen und insbesondere mit gleichem Betrag angeordnet sind.

6. Bearbeitungswerkzeug nach Anspruch 5,
**dadurch gekennzeichnet, dass** die als Umfangsschneiden ausgebildeten Schneiden (2, 2') paarweise gegenläufig angeordnet sind.

7. Bearbeitungswerkzeug nach Anspruch 5 oder 6,
**dadurch gekennzeichnet, dass** die einzelnen Gruppen von Schneiden (2) und gegenläufigen Schneiden (2') eine jeweils unterschiedliche Farbmarkierung (8, 9) aufweisen.

8. Bearbeitungswerkzeug nach Anspruch 4,
**dadurch gekennzeichnet, dass** die als Umfangsschneiden ausgebildeten Schneiden (2) gleichläufig oder überwiegend gleichläufig in Achswinkeln (λ₁) mit gleichem Vorzeichen und insbesondere mit gleichem Betrag angeordnet sind.

9. Bearbeitungswerkzeug nach einem der Ansprüche 1 bis 8,
**dadurch gekennzeichnet, dass** die Schneidkanten (3, 3') der als Umfangsschneiden ausgebildeten Schneiden (2, 2') derart ballig profiliert sind, dass sie entlang ihrer gesamten Länge auf einem gemeinsamen Flugkreisprofil und insbesondere auf einem gemeinsamen Flugkreiszylinder verlaufen.

10. Bearbeitungswerkzeug nach einem der Ansprüche 1 bis 9,
**dadurch gekennzeichnet, dass** die Schneiden (2'') mit ihren Schneidkanten (3'') als Stirnschneiden mit einer Drehbewegungsrichtung (6) ausgebildet sind, wobei die zugehörigen Achswinkel (λ₂) in einer Ebene gemessen sind, die durch die Drehbewegungsrichtung (6) und eine senkrecht zur Drehachse (1) liegenden Radialrichtung (7) aufgespannt ist, wobei die Achswinkel (λ₂) zwischen der Schneidkante (3") und der Radialrichtung (7) gebildet sind.

11. Bearbeitungswerkzeug nach einem der Ansprüche 1 bis 10,
**dadurch gekennzeichnet, dass** die Schneidplatten (11) aus Hartmetall, Schneidkeramik, monokristallinem Diamant, PKD oder CVD sind.

12. Bearbeitungswerkzeug nach einem der Ansprüche 1 bis 11,
**dadurch gekennzeichnet, dass** das Bearbeitungswerkzeug (14) aus mindestens einem, bevorzugt mehreren auf einer Welle (16) montierten Einzelwerkzeugen zusammengesetzt ist.

## Claims

1. A machining tool (14) for machining materials by removing material, in particular for wood or wood-like materials, metals, plastics and/or composite materials, provided to be rotationally driven about an axis of rotation (1), comprising a base body (10) and at least one row (17, 18, 19) of individual cutters (2, 2', 2") that are arranged in the circumferential direction and are implemented as plane cutting plates (11) separately from the base body (10) and made of an ultra-hard cutting material and having cutting edges (3, 3', 3") which overlap at least partially, wherein the cutting edges (3, 3', 3") have a wedge angle (β) and are arranged at an axial angle (λ₁, λ₁', λ₂) to the axis of rotation (1),
**characterized in that** the axial angle (λ₁, λ₁', λ₂) lies in a range from 55° to < 90° inclusive, and that the wedge angle (β) ≥ 55°.

2. The machining tool according to claim 1,
**characterized in that** the wedge angle (β) lies in a range from 55° inclusive to 80° inclusive.

3. The machining tool according to claim 1 or claim 2,
**characterized in that** the axial angle (λ₁, λ₁', λ₂) lies in a range from 60° inclusive to 80° inclusive and is in particular approximately 70°.

4. The machining tool according to any one of claims 1 to 3,
**characterized in that** the cutters (2, 2') with their cutting edges (3, 3') are formed as circumference cutters having a rotational moving direction (4), wherein the associated axial angles (λ₁, λ₁') are measured in a plane spanned by a rotational moving direction (4) and an axial direction (5) parallel to the axis of rotation (1), and wherein the axial angles (λ₁, λ₁') are formed between the cutting edge (3, 3') and the axial direction (5).

5. The machining tool according to claim 4,
**characterized in that** the cutters (2, 2') formed as circumference cutters are arranged in groups working in opposing directions at axial angles (λ₁, λ₁') with an opposite sign and in particular with the same absolute value.

6. The machining tool according to claim 5,
**characterized in that** the cutters (2, 2') are arranged in pairs working in opposing directions.

7. The machining tool according to claim 5 or claim 6,
**characterized in that** the individual groups of cutters (2) and opposingly working cutters (2') each have different color markings (8, 9).

8. The machining tool according to claim 4,
**characterized in that** the cutters (2) formed as circumference cutters are arranged so as to work in the same direction or largely in the same direction at axial angles (λ₁) with the same sign and in particular with the same absolute value.

9. The machining tool according to any one of claims 1 to 8,
**characterized in that** the cutting edges (3, 3') of the cutters (2, 2') formed as circumference cutters are profiled in a crowned manner such that they extend along their entire length on a common cutting circle profile and in particular on a common cutting circle cylinder.

10. The machining tool according to any one of claims 1 to 9,
**characterized in that** the cutters (2") with their cutting edges (3") are formed as face cutters having a rotational moving direction (6), wherein the associated axial angles (λ₂) are measured in a plane spanned by a rotational moving direction (6) and a radial direction (7) perpendicular to the axis of rotation (1), wherein the axial angles (λ₂) are formed between the cutting edge (3") and the radial direction (7).

11. The machining tool according to any one of claims 1 to 10,
**characterized in that** the cutting plates (11) are made of carbide, cutting ceramics, monocrystalline diamond, PCD or CVD.

12. The machining tool according to any one of the claims 1 to 11,
**characterized in that** the machining tool (14) is composed of at least one, preferably a plurality of individual tools mounted on a shaft (16).

## Revendications

1. Outil d'usinage (14) pour l'usinage par enlèvement de copeaux de matériaux, en particulier pour du bois ou des matériaux de type bois, des métaux, des plastiques et/ou des matériaux composites, prévu pour l'entrainement par rotation autour d'un axe de rotation (1) comprenant un corps de base (10) et au moins une rangée (17, 18, 19), disposée dans le sens périphérique, de lames (2, 2', 2") individuelles réalisées séparément du corps de base (10) sous forme de plaques de coupe planes (11) et composées d'une matière de coupe extrêmement dure avec des arêtes de coupe (3, 3', 3"), qui se chevauchent au moins partiellement, les arêtes de coupe (3, 3', 3") présentant un angle de tranchant (β) et se situant dans un angle d'axe (λ₁, λ₁', λ₂) par rapport à l'axe de rotation (1),
**caractérisé en ce que** l'angle d'axe (λ₁, λ₁', λ₂) se situe dans une plage de 55° jusqu'à moins de 90° inclus, et **en ce que** l'angle de tranchant (β) est ≥ 55°.

2. Outil d'usinage selon la revendication 1,
**caractérisé en ce que** l'angle de tranchant (β) se situe dans une plage allant de 55° inclus à 80° inclus.

3. Outil d'usinage selon la revendication 1 ou 2,
**caractérisé en ce que** l'angle d'axe (λ₁, λ₁', λ₂) se situe dans une plage allant de 60° inclus à 80° inclus et est en particulier d'environ 70°.

4. Outil d'usinage selon l'une des revendications 1 à 3,
**caractérisé en ce que** les lames (2, 2') sont formées avec leurs arêtes de coupe (3, 3') comme des lames périphériques avec un sens de mouvement de rotation (4), les angles d'axe (λ₁, λ₁') spécifiques étant mesurés dans un plan qui est sous-tendu par le sens de mouvement de rotation (4) et une direction axiale (5) située parallèlement à l'axe de rotation (1), et les angles d'axe (λ₁, λ₁') étant formés entre l'arête de coupe (3, 3') et la direction axiale (5).

5. Outil d'usinage selon la revendication 4,
**caractérisé en ce que** les lames (2, 2') conçues comme des lames périphériques sont disposées en groupes dans le sens contraire dans des angles d'axe (λ₁, λ₁') avec un signe opposé et en particulier avec une valeur identique.

6. Outil d'usinage selon la revendication 5,
**caractérisé en ce que** les lames (2, 2') conçues comme des lames périphériques sont disposées par paires dans le sens contraire.

7. Outil d'usinage selon la revendication 5 ou 6,
**caractérisé en ce que** les groupes individuels de lames (2) et de lames (2') opposées présentent chacun un marquage de couleur (8, 9) respectivement différent.

8. Outil d'usinage selon la revendication 4,
**caractérisé en ce que** les lames (2) conçues comme des lames périphériques sont réalisées dans le même sens ou majoritairement dans le même sens dans des angles d'axe (λ₁) avec le même signe et en particulier avec la même amplitude.

9. Outil d'usinage selon l'une des revendications 1 à 8,
**caractérisé en ce que** les arêtes de coupe (3, 3') des lames (2, 2') conçues comme des lames périphériques sont profilées bombées de telle sorte qu'elles sont agencées le long de leur longueur totale sur un profil d'orbite commun et en particulier sur un cylindre d'orbite commun.

10. Outil d'usinage selon l'une des revendications 1 à 9,
**caractérisé en ce que** les lames (2") sont conçues avec leurs arêtes de coupe (3") comme des lames frontales avec une direction de mouvement de rotation (6), les angles d'axe (λ₂) spécifiques étant mesurés dans un plan qui est sous-tendu par la direction du mouvement de rotation (6) et une direction radiale (7) située perpendiculairement à l'axe de rotation (1), les angles d'axe (λ₂) étant formés entre l'arête de coupe (3") et la direction radiale (7).

11. Outil d'usinage selon l'une des revendications 1 à 10,
**caractérisé en ce que** les plaques de coupe (11) sont en carbure, céramique de coupe, diamant monocristallin, PKD ou CVD.

12. Outil d'usinage selon l'une des revendications 1 à 11,
**caractérisé en ce que** l'outil d'usinage (14) est constitué d'au moins un, de préférence plusieurs outils individuels montés sur un arbre (16).
